# EUROPÄISCHE PATENTSCHRIFT

(11) **EP 2 929 165 B1**
(45) Veröffentlichungstag und Bekanntmachung des Hinweises auf die Patenterteilung: **16.05.2018**
(21) Anmeldenummer: 13788948.1
(22) Anmeldetag: 05.11.2013
(51) Int. Cl.: F02D 9/10, F02D 9/04, F16K 1/226

(54) **KLAPPENVORRICHTUNG FÜR EINE VERBRENNUNGSKRAFTMASCHINE**
FLAP DEVICE FOR AN INTERNAL COMBUSTION ENGINE
DISPOSITIF À CLAPET POUR MOTEUR À COMBUSTION INTERNE

(30) Priorität: 07.12.2012 DE 102012111948
(43) Veröffentlichungstag der Anmeldung: 14.10.2015
(73) Patentinhaber: Pierburg GmbH, 41460 Neuss (DE)
(72) Erfinder: HEMSING, Axel, 40545 Düsseldorf (DE); VOIGTLÄNDER, Karsten, 40625 Düsseldorf (DE); KRAWINKEL, Uwe, 41564 Kaarst (DE)
(74) Vertreter: Patentanwälte ter Smitten Eberlein-Van Hoof Rütten Partnerschaftsgesellschaft mbB
(86) Internationale Anmeldenummer: PCT/EP2013/073006
(87) Internationale Veröffentlichungsnummer: WO 2014/086537

(56) Entgegenhaltungen:
- WO-A1-2011/091909
- GB-A- 889 952

## Beschreibung

Die Erfindung betrifft eine Klappenvorrichtung für eine Verbrennungskraftmaschine mit einem Strömungsgehäuse, in dem ein Strömungskanal ausgebildet ist, einer Stellwelle, einem Klappenkörper, der auf der Stellwelle im Strömungskanal angeordnet ist, einer Bohrung im Strömungsgehäuse, durch welche die Stellwelle nach außen ragt, einer ersten Lagerbuchse, welche in der Bohrung angeordnet ist, und in der die Stellwelle gelagert ist und Dichtmitteln, welche die Stellwelle radial umgeben und eine ringförmige Metallmembran aufweisen.

Derartige Klappenvorrichtungen dienen beispielsweise als Abgasstauklappen oder Abgasrückführklappen im Abgasstrang eines Verbrennungsmotors. Das Abgas enthält Schadstoffe, welche nicht nach außen dringen dürfen, so dass eine zuverlässige Abdichtung entlang der Welle, die nach außen in Richtung eines Aktuators ragt sichergestellt werden muss. Diese Abdichtung muss bei den wechselnden thermischen Belastungen jederzeit einwandfrei funktionieren. Zusätzlich muss mit den Klappen eine sehr genaue Regelbarkeit eingehalten werden, um die Schadstoffrichtlinien moderner Verbrennungsmotoren zu erfüllen.

Es sind verschiedene Klappenvorrichtungen bekannt geworden, mit denen versucht wird, diese Ziele zu erfüllen. So wird in der DE 20 2008 005 992 U1 ein zweiseitig gelagertes Klappenventil zur Verwendung im Heißbereich von Abgasanlagen offenbart, bei dem eine auf einem schrägen Absatz der Welle angeordnete Dichtung über Federkraft gegen eine gegenüberliegende Dichtfläche des Gehäuses gedrückt wird. Die Abdichtstelle dient dabei gleichzeitig zur Axialsicherung der Klappenwelle.

Beim Schließen der Klappe kann hierdurch aufgrund der Zentrierung der Klappen im Kanal sowie durch auftretende Wärmedehnungen ein Verklemmen der Klappe im Kanal folgen.

Des Weiteren ist aus der JP 07259586 eine Abgasklappe bekannt, bei der hinter der Lagerbuchse ein durch Schrauben fixierter dünner Metallring angeordnet ist, dessen Außenumfang gegen die seitlich begrenzende Wand des umliegenden Gehäuses anliegt. Bei auftretenden Wärmedehnungen wird der Metallring entlang der umliegenden Seitenwand verschoben. Aufgrund der geringen Auflagefläche oder im Laufe der Zeit entstehender Riefen am Gehäuse ist auf Dauer keine ausreichende Dichtigkeit gegeben. Des Weiteren tritt durch die Drehung des Metallrings ein erhöhter Verschleiß auf.

Aus der GB 889,952 ist ein Drehwalzenventil, dessen Betätigungswelle eine Bohrung im Gehäuse durchgreift und um die herum ein mit Asbest beschichteter Metallring angeordnet ist, dessen Außenumfang zwischen zwei Gehäuseteilen eingeklemmt ist und dessen Innenumfang gegen die Welle anliegt. Am Innenumfang des Metallrings liegt eine Stahlbuchse auf, über die der Metallring gegen den Ventilkörper gedrückt wird.

Die WO 2011/091909 A1 offenbart eine Klappenvorrichtung, bei der über eine Feder eine Bundbuchse, die die Welle umgibt, gegen einen Gleitscheibe drückt, die mit ihrem Außenumfang gegen das Strömungsgehäuse gedrückt wird. Zur Verbesserung der Abdichtung sind am Wellenumfang oder in der Bundbuchse Radialnuten ausgebildet.

Entsprechend bestehen bei den bekannten Ausführungen die Nachteile, dass eine ausreichende Abdichtung bei Änderung der thermischen Verhältnisse und gleichzeitig eine Verstellbarkeit der Klappe, ohne ein Verklemmen befürchten zu müssen nicht gegeben ist.

Es stellt sich daher die Aufgabe, eine Klappenvorrichtung für eine Verbrennungskraftmaschine zu schaffen, bei der unabhängig von der thermischen Belastung und von daraus folgenden Wärmedehnungen eine sichere Abdichtung gewährleistet wird und eine Leichtgängigkeit des Klappenkörpers sichergestellt wird. Der Verschleiß soll im Vergleich zu bekannten Ausführungsformen verringert werden und eine lange Lebensdauer sichergestellt werden.

Diese Aufgabe wird durch eine Klappenvorrichtung mit den Merkmalen des Hauptanspruchs gelöst. Dadurch, dass ein radial äußerer Abschnitt der Metallmembran axial zwischen einer Verschlussbuchse und einem eine Anlagefläche bildenden Absatz an der Bohrung des Strömungsgehäuses eingeklemmt ist und ein radial innerer Abschnitt gegen einen radial inneren Bereich eines Gleitringes anliegt, dessen Berührungsfläche mit der Metallmembran näher zum Strömungskanal angeordnet ist als die Anlagefläche, wobei die Dichtmittel eine an der Stellwelle befestigte Wellenbuchse aufweisen, gegen die der Gleitring mit seiner zur Metallmembran axial entgegengesetzten Seite anliegt, wird durch die Metallmembran einerseits eine Abdichtung im äußeren Bereich und andererseits eine Abdichtung im radial inneren Bereich der Metallmembran erzielt, wobei eine axiale Verschiebung der Stellwelle diese Dichtwirkung nicht beeinträchtigt. Die axiale Lage der Welle wird nicht durch bezüglich der Welle fest positionierte nicht flexible Dichtmittel festgelegt, so dass eine geringe Verschiebung durch die Drehung der Klappe oder durch thermische Ausdehnung nicht zu einem Verklemmen der Klappe führen kann. Ein Strömen des Abgases entlang der Stellwelle wird verhindert und die relative Lage des Gleitrings zur Welle festgelegt.

In einer besonders vorteilhaften Ausbildung des Gleitringes ist dieser im radial inneren Bereich sphärisch gekrümmt ausgebildet. So entsteht eine flächige Auflage der Metallmembran auf dem Gleitring bei jeder Temperatur. Durch die flächige Auflage entsteht eine gute Dichtwirkung. Diese Dichtwirkung wird auch bei einem Kippen der Welle innerhalb des Lagerspiels aufrecht erhalten.

In einer bevorzugten Ausführungsform ist die Verschlussbuchse topfförmig ausgebildet, wobei der Boden der Verschlussbuchse eine Öffnung aufweist, durch die die Stellwelle ragt und das axiale Ende der Seitenwände liegt gegen die Metallmembran an. Somit wird durch die Verschlussbuchse einerseits die Bohrung zumindest teilweise verschlossen und andererseits die Befestigung der Metallmembran sichergestellt. Dabei kann die Verschlussbuchse entweder eingepresst werden oder im Gehäuse durch Umbiegen des umliegenden Gehäuses befestigt werden.

Vorzugsweise ist die Anlagefläche in einem Bereich der radial innerhalb der Seitenwände der Verschlussbuchse ausgebildet ist, sphärisch geformt. Hierdurch wird an der zum Gleitring gegenüberliegenden Seite der Metallmembran ein Abknicken und somit eine lediglich linienförmige Berührung verhindert. Es ergibt sich stattdessen auch bei weiterer Federbelastung der Metallmembran eine flächige Auflage mit guten Dichteigenschaften.

In einer besonders vorteilhaften Ausbildung ist an den Seitenwänden der Verschlussbuchse eine Ausnehmung ausgebildet, in die ein sich nach radial außen erstreckender Vorsprung des Gleitrings ragt. So wird verhindert, dass die Wellenbuchse den Gleitring bei der Drehbewegung der Stellwelle mitnimmt, so dass eine Relativbewegung zwischen Gleitring und Verschlussbuchse sowie zwischen Gleitring und Metallmembran verhindert wird, wodurch der Verschleiß deutlich reduziert wird.

Vorzugsweise ist in der Bohrung eine zweite Lagerbuchse angeordnet, welche mit ihrem axialen Ende in den Strömungskanal ragt. Vorteilhafterweise ist dann der Klappenkörper gegen die zweite Lagerbuchse oder eine an die zweite Lagerbuchse angrenzende Anlaufscheibe durch die Kraft einer Druckfeder belastet. Diese Lagerbuchse dient mit dem Klappenkörper zur Axialsicherung der Stellwelle, so dass diese Axialsicherung nicht mehr über die Dichtmittel erfolgt. So kann die interne Leckage reduziert werden, da der Klappenkörper in seiner Außenkontur genauer an den Kanal angepasst werden kann. Um bei einer solchen Axialsicherung der Stellwelle über den Klappenkörper zusätzlich den Verschleiß zu reduzieren, liegt der Klappenkörper gegen eine an die zweite Lagerbuchse angrenzende Anlaufscheibe an.

In einer weiterführenden Ausführungsform der Erfindung ist an der zur Bohrung gegenüberliegenden Seite des Strömungsgehäuses ein Sackloch ausgebildet, in welchem eine dritte Lagerbuchse angeordnet ist, in welcher die Stellwelle gelagert ist. Entsprechend ist die Stellwelle beidseitig im Strömungsgehäuse gelagert, so dass auch bei hohem Abgasdruck keine Schädigungen der Lagerbuchse zu erwarten sind.

Des Weiteren ist es vorteilhaft, wenn die dritte Lagerbuchse mit ihrem axialen Ende in den Strömungskanal ragt. Durch einen die Lagerbuchse umgreifenden Vorsprung an dem Klappenkörper kann so ein Eindringen von Schmutz in die dritte Lagerbuchse weitestgehend verhindert werden, wodurch die Lebensdauer erhöht wird.

Es wird somit eine Klappenvorrichtung für eine Verbrennungskraftmaschine geschaffen, welche sowohl nach außen auch bei sich ändernden thermischen Belastungen ausreichend dicht ist als auch intern lediglich geringe Leckagen aufweist, da Bauteil- und Montagetoleranzen sowie Wärmedehnungen durch die axial flexible Metallmembran ausgeglichen werden. Des Weiteren wird ein Schmutzeintrag von außen vermieden. Der Verschleiß an der Klappenvorrichtung wird deutlich reduziert, so dass eine lange Lebensdauer erreicht wird.

Ein Ausführungsbeispiel einer erfindungsgemäßen Klappenvorrichtung ist in den Figuren dargestellt und wird nachfolgend beschrieben.

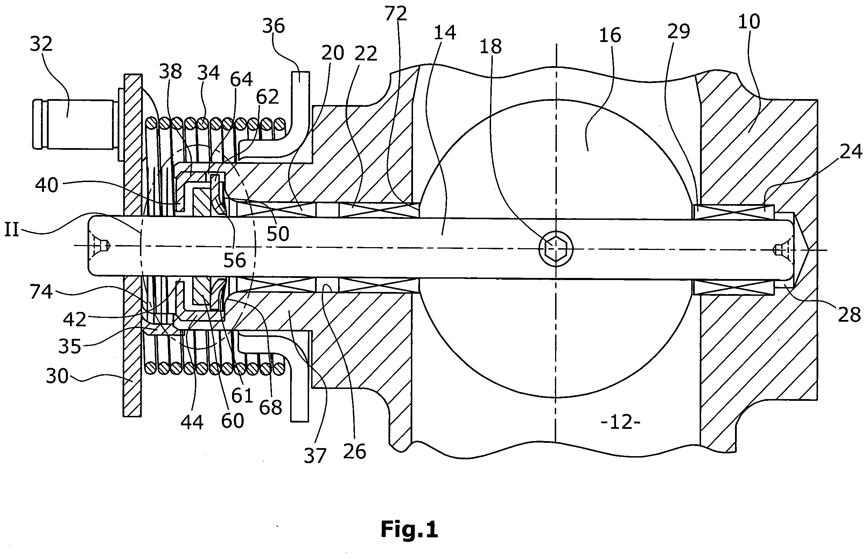

Figur 1 zeigt eine Seitenansicht einer erfindungsgemäßen Klappenvorrichtung in geschnittener Darstellung.

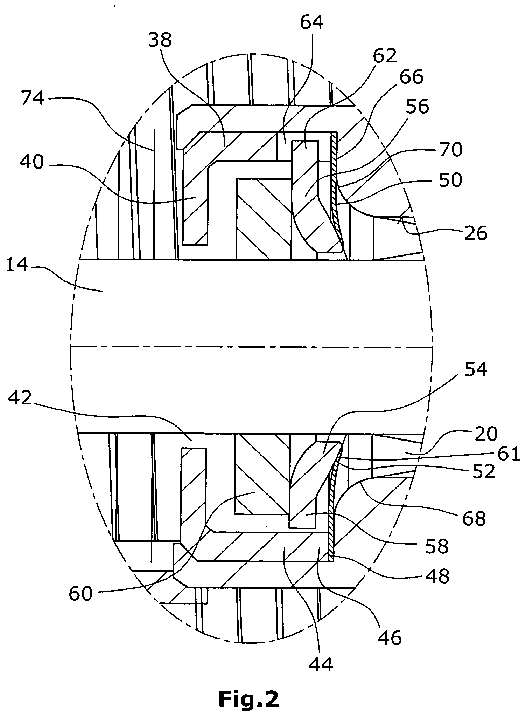

Figur 2 zeigt einen vergrößerten Ausschnitt der Wellenabdichtung der erfindungsgemäßen Klappenvorrichtung gemäß der Figur 1.

Die erfindungsgemäße Klappenvorrichtung besteht aus einem Strömungsgehäuse 10, in dem ein beispielsweise von Abgas durchströmter Strömungskanal 12 ausgebildet ist.

Der Strömungskanal 12 wird im Querschnitt durch eine Stellwelle 14 in zwei Hälften geteilt, auf der ein Klappenkörper 16 mittels einer Schraube 18 befestigt ist. Die Stellwelle 14 ist im Strömungsgehäuse 10 über drei Lagerbuchsen 20, 22, 24 gelagert, von denen die ersten zwei Lagerbuchsen 20, 22 in einer durchgängigen Bohrung 26 angeordnet sind, durch welche die Stellwelle 14 aus dem Strömungsgehäuse 10 nach außen ragt, und die dritte Lagerbuchse 24 auf der zur Bohrung 26 gegenüberliegenden Seite in einem im Strömungsgehäuse 10 ausgebildeten Sackloch 28 angeordnet ist, wobei ein axiales Ende 29 der dritten Lagerbuchse 24 in den Strömungskanal 12 ragt. Entsprechend entsteht an bezüglich der Mittelachse des Strömungsgehäuses 10 gegenüberliegenden Seiten eine zweiseitige Lagerung der Stellwelle 14.

Auf dem nach außen ragenden Ende der Stellwelle 14 ist eine als Hebel dienende Scheibe 30 befestigt, an deren radialem Endbereich ein Zapfen 32 befestigt ist, über den die Stellwelle 14 über ein nicht dargestelltes Hebelgestänge mit einem Aktor verbindbar ist, der insbesondere als ein Elektromotor ausgeführt werden kann.

Auf der zum Zapfen 32 entgegengesetzten Seite der Scheibe 30 ist eine Rückstellfeder 34 angeordnet, deren eines Ende gegen einen an der Scheibe 30 ausgebildeten Zapfen 35 anliegt und deren gegenüberliegendes Ende gegen einen nicht dargestellten Anschlag anliegt, der an einem Gehäuse 36 des Aktors ausgebildet ist, welches einen sich in Richtung zum Hebel 30 vom Strömungsgehäuse 10 erstreckenden Lager- und Dichtabschnitt 37 des Strömungsgehäuses 10 umgreift und als Führung und axiale Auflage für die Rückstellfeder 34 dient. Je nach Anwendung wird durch eine Vorspannung beim Einbau der Rückstellfeder 34 in bekannter Weise eine definierte fail-safe Stellung der Stellwelle 14 bei Ausfall des Aktors angefahren.

Die Bohrung 26, die sich durch den Lager- und Dichtabschnitt 37 des Strömungsgehäuses 10 erstreckt, wird durch eine topfförmige Verschlussbuchse 38 verschlossen, in deren Boden 40 eine Öffnung 42 ausgebildet ist, durch die die Stellwelle 14 ragt. Sich von dem Boden aus erstreckende Seitenwände 44 der Verschlussbuchse liegen radial gegen innere Wände der Bohrung 26 an und liegen axial mit ihrem Ende 46 gegen einen radial äußeren Abschnitt 48 einer ringförmigen Metallmembran 50 an, gegen deren radial inneren Abschnitt 52 ein radial innerer sphärisch gekrümmter Bereich 54 eines Gleitrings 56 anliegt.

Ein flacher radial äußerer Bereich 58 des Gleitringes 56 liegt an der axial gegenüberliegenden Seite fest gegen eine Wellenbuchse 60 an, welche auf die Stellwelle 14 gepresst ist und ebenfalls im Innern der Verschlussbuchse 38 angeordnet ist. Der Gleitring 56 weist an einer Seite einen sich radial erstreckenden Vorsprung 62 auf, der in eine Ausnehmung 64 ragt, die am axialen Ende 46 der Seitenwand 44 der Verschlussbuchse 38 ausgebildet ist, so dass eine Drehung des Gleitrings 56 verhindert wird. Dies bedeutet, dass bei Drehung der Stellwelle 14 ausschließlich eine Relativbewegung zwischen dem Gleitring 56 und der Wellenbuchse 60 stattfindet, während der Gleitring 56 zur Metallmembran 50 still steht, wodurch der Verschleiß minimiert und die Dichtwirkung der Einheit erhalten bleibt.

Wie oben ausgeführt, liegt gegen die ringförmige Metallmembran 50 von der ersten axialen Seite im radial äußeren Abschnitt 48 das axiale Ende 46 der Seitenwände 44 der Verschlussbuchse 38 an. Durch die Verschlussbuchse 38 wird auf diese Weise der radial äußere Abschnitt 48 der Metallmembran 50 gegen eine axiale Anschlagfläche 66 gepresst, die durch einen Absatz 68 in der Bohrung 26 geschaffen wird, so dass diese Dichtungseinheit in einem Abschnitt der Bohrung 26 mit größerem Durchmesser angeordnet ist.

Die Anschlagfläche 66 ist in ihrem radial äußeren Bereich senkrecht zur Stellwellenachse angeordnet und weist einen sich an den radial äußeren Bereich anschließenden und nach radial innen erstreckenden Bereich 70 auf, der sphärisch geformt ist, so dass der Absatz 68 in diesem Bereich 70 durch einen stetigen Übergang erzeugt wird.

Erfindungsgemäß sind die Dichtmittel bestehend aus ringförmiger Metallmembran 50, Gleitring 56 und Wellenbuchse 60 derart in der Bohrung 26 angeordnet, dass der radial innere Abschnitt 52 im Vergleich zum festliegenden radial äußeren Abschnitt 48 in Richtung zum Strömungskanal 12 gebogen ist. Dies wird erreicht, indem die Wellenbuchse 60 so auf der Stellwelle 14 positioniert wird, dass der sphärische innere Bereich 54 des Gleitrings 56 und damit auch eine Berührungsfläche 61 zwischen dem sphärischen Bereich 54 des Gleitrings 56 und dem radial inneren Abschnitt 52 der Metallmembran 50 in Richtung zum Strömungskanal 12 über die Anlagefläche 66 axial vorsteht. Hierdurch wird eine Federkraft an der Metallmembran 50 erzeugt.

Abgas, welches den Strömungskanal 12 verlässt und entlang der Stellwelle 14 die Lagerbuchsen 20, 22 passiert, gelangt entweder durch die Öffnung des Gleitrings 56 und wird hier durch die Wellenbuchse 60 selbst oder die Dichtfläche zwischen Wellenbuchse 60 und Gleitring 56 gestoppt oder strömt entlang der Metallmembran 50, wo das Abgas entweder im radial inneren Abschnitt 52 durch die als Dichtfläche wirkende Berührungsfläche 61 zwischen der gespannten Metallmembran 50 und dem sphärischen Bereich 54 des Gleitrings 56 am Weiterströmen gehindert wird oder im radial äußeren Abschnitt 48 durch die Auflage der Metallmembran 50 auf der Anlagefläche 66 gestoppt wird. Dabei sorgt die sphärische Ausbildung des Gleitrings 56 und des Bereichs 70 der Anlagefläche 66 dafür, dass ein Abknicken der Metallmembran 50 verhindert wird. Stattdessen wird sowohl zwischen dem Gleitring 56 und der Metallmembran 50 als auch zwischen der Metallmembran 50 und der Anlagefläche 66 immer eine möglichst breite Dichtfläche erzeugt, da sich die Metallmembran 50 flächig gegen das gegenüberliegende Bauteil anlegen kann, ohne dabei gegen eine Kante anzuliegen, durch die eine lediglich linienförmige Berührung erzeugt würde.

Andererseits bedeutet dies, dass die Stellwelle 14 durch die flexible Metallmembran 50 axial in gewissem Maße beweglich ist. Die Dichteinheit dient also nicht zur axialen Fixierung der Stellwelle 14 und damit des Klappenkörpers 16 im Strömungskanal 12.

Diese Axialsicherung wird dadurch hergestellt, dass die zweite Lagerbuchse 22 mit ihrem axialen Ende 72 geringfügig in den Strömungskanal 12 ragt und zwischen der Verschlussbuchse 38 und der Scheibe 30 eine Druckfeder 74 angeordnet ist, über die die Stellwelle 14 und damit der Klappenkörper 16 in Richtung dieses Endes 72 der zweiten Lagerbuchse 22 belastet wird. Entsprechend wird die Axialsicherung der Stellwelle 14 durch das Zusammenspiel des Klappenkörpers 16 und des Endes 72 der Lagerbuchse 22 erzeugt.

Treten im Betrieb nicht berücksichtigte Bauteil- und Montagetoleranzen auf oder entstehen beispielsweise durch sich ändernde thermische Belastungen Wärmedehnungen oder Verschleiß durch Nutzung bleibt eine ausreichende Abdichtung sichergestellt, da durch die Flexibilität der als Dichtungselement wirkenden Metallmembran axiale Verzüge ausgeglichen werden. Auch ein Zentrieren des Klappenkörpers in der den Kanal verschließenden Position führt nicht zu einer Trennung der dichtenden Teile aufgrund dieses Axialausgleichs durch die vorgespannte Metallmembran. Durch diese Trennung von Wellenaxialsicherung und Abdichtung wird ein Klemmen der Klappe bei Verzug verhindert. Ein Schmutzeintrag von außen wird dadurch ausgeschlossen, dass die Dichtmittel von außen gesehen bereits vor der ersten Lagerbuchse angeordnet sind. Die Klappenvorrichtung und deren Abdichtung weisen eine lange Lebensdauer durch geringen Verschleiß auf.

Es sollte deutlich sein, dass der Schutzbereich nicht auf die beschriebene Klappenvorrichtung beschränkt ist, sondern verschiedene Modifikationen denkbar sind. So können beispielsweise zwischen feststehenden und sich drehenden Teilen Anlaufscheiben verwendet werden.

## Patentansprüche

1. Klappenvorrichtung für eine Verbrennungskraftmaschine mit
einem Strömungsgehäuse (10), in dem ein Strömungskanal (12) ausgebildet ist,
einer Stellwelle (14),
einem Klappenkörper (16), der auf der Stellwelle (14) im Strömungskanal (12) angeordnet ist,
einer Bohrung (26) im Strömungsgehäuse (10), durch welche die Stellwelle (14) nach außen ragt,
einer ersten Lagerbuchse (20), welche in der Bohrung (26) angeordnet ist, und in der die Stellwelle (14) gelagert ist und Dichtmitteln, welche die Stellwelle (14) radial umgeben und eine ringförmige Metallmembran (50) aufweisen,
**dadurch gekennzeichnet, dass**
ein radial äußerer Abschnitt (48) der Metallmembran (50) axial zwischen einer Verschlussbuchse (38) und einem eine Anlagefläche (66) bildenden Absatz (68) an der Bohrung (26) des Strömungsgehäuses (10) eingeklemmt ist und ein radial innerer Abschnitt (52) gegen einen radial inneren Bereich (54) eines Gleitringes (56) anliegt, dessen Berührungsfläche (61) mit der Metallmembran (50) näher zum Strömungskanal (12) angeordnet ist als die Anlagefläche (66), wobei die Dichtmittel eine an der Stellwelle (14) befestigte Wellenbuchse (60) aufweisen, gegen die der Gleitring (56) mit seiner zur Metallmembran (50) axial entgegengesetzten Seite anliegt.

2. Klappenvorrichtung für eine Verbrennungskraftmaschine nach Anspruch 1,
**dadurch gekennzeichnet, dass**
der Gleitring (56) im radial inneren Bereich (54) sphärisch gekrümmt ausgebildet ist.

3. Klappenvorrichtung für eine Verbrennungskraftmaschine nach einem der vorhergehenden Ansprüche,
**dadurch gekennzeichnet, dass**
die Verschlussbuchse (38) topfförmig ausgebildet ist, wobei ein Boden (40) der Verschlussbuchse (38) eine Öffnung (42) aufweist, durch die die Stellwelle (14) ragt und ein axiales Ende (46) der Seitenwände (44) gegen die Metallmembran (50) anliegt.

4. Klappenvorrichtung für eine Verbrennungskraftmaschine nach Anspruch 3,
**dadurch gekennzeichnet, dass**
die Anlagefläche (66) in einem Bereich (70) der radial innerhalb der Seitenwände (44) der Verschlussbuchse (42) ausgebildet ist, sphärisch geformt ist.

5. Klappenvorrichtung für eine Verbrennungskraftmaschine nach einem der Ansprüche 3 oder 4,
**dadurch gekennzeichnet, dass**
an den Seitenwänden (44) der Verschlussbuchse (42) eine Ausnehmung (64) ausgebildet ist, in die ein sich nach radial außen erstreckender Vorsprung (62) des Gleitrings (56) ragt.

6. Klappenvorrichtung für eine Verbrennungskraftmaschine nach einem der vorhergehenden Ansprüche,
**dadurch gekennzeichnet, dass**
in der Bohrung (26) eine zweite Lagerbuchse (22) angeordnet ist, welche mit ihrem axialen Ende (72) in den Strömungskanal (12) ragt.

7. Klappenvorrichtung für eine Verbrennungskraftmaschine nach Anspruch 6,
**dadurch gekennzeichnet, dass**
der Klappenkörper (16) gegen die zweite Lagerbuchse (22) oder eine an die zweite Lagerbuchse (22) angrenzende Anlaufscheibe durch die Kraft einer Druckfeder (74) belastet ist.

8. Klappenvorrichtung für eine Verbrennungskraftmaschine nach einem der Ansprüche 6 oder 7,
**dadurch gekennzeichnet, dass**
an der zur Bohrung (26) gegenüberliegenden Seite des Strömungsgehäuses (10) ein Sackloch (28) ausgebildet ist, in welchem eine dritte Lagerbuchse (24) angeordnet ist, in welcher die Stellwelle (14) gelagert ist.

9. Klappenvorrichtung für eine Verbrennungskraftmaschine nach Anspruch 8,
**dadurch gekennzeichnet, dass**
die dritte Lagerbuchse (24) mit ihrem axialen Ende (29) in den Strömungskanal (12) ragt.

## Claims

1. A flap device for internal combustion engines, with
a flow housing (10), in which a flow channel (12) is formed,
an actuating shaft (14),
a flap body (16) that is arranged on the actuating shaft (14) in the flow channel (12),
a bore (26) in the flow housing (10), through which the actuating shaft (14) protrudes to the exterior,
a first bearing bush (20), which is arranged in the bore (26) and in which the actuating shaft (14) is mounted, and
sealing means that surround the actuating shaft (14) radially and have an annular metal membrane (50),
**characterized in that**
a radially outer portion (48) of the metal membrane (50) is clamped axially between a closure bush (38) and a shoulder (68) forming a contact surface (66) on the bore (26) of the flow housing (10), and a radially inner portion (52) rests against a radially inner portion (54) of a slide ring (56), the mating surface (61) of which with the metal membrane (50) is arranged more closely to the flow channel (12) than the contact surface (66), wherein the sealing means comprise a shaft sleeve (60) mounted on the actuating shaft (14), the sliding ring (56) resting on said sleeve with its side axially opposite the metal membrane (50).

2. The flap device for an internal combustion engine of claim 1, **characterized in that** the sliding ring (56) is spherically curved in the radially inner portion (54).

3. The flap device for an internal combustion engine of one of the preceding claims, **characterized in that** the closure bush (38) is pot-shaped, a bottom (40) of the closure bush (38) having an opening (42) through which the actuating shaft (14) protrudes and an axial end (46) of the side walls (44) rests on the metal membrane (50).

4. The flap device for an internal combustion engine of claim 3, **characterized in that** the contact surface (66) is shaped spherically in a region (70) formed inside the side walls (44) of the closure bush (38).

5. The flap device for an internal combustion engine of one of claims 3 or 4, **characterized in that** the side walls (44) of the closure bush (38) are provided with a recess (64) into which a protrusion (62) of the sliding ring (56) protrudes, said protrusion extending radially outward.

6. The flap device for an internal combustion engine of one of the preceding claims, **characterized in that** a second bearing bush (22) is arranged in the bore (26), the axial end (72) of the bush protruding into the flow channel (12).

7. The flap device for an internal combustion engine of claim 6, **characterized in that** the flap body (16) is tensioned against the second bearing bush (22) or a thrust washer adjoining the second bearing bush (22) by the force of a compression spring (74).

8. The flap device for an internal combustion engine of one of claims 6 or 7, **characterized in that** on the side of the flow housing (10) opposite the bore (26), a blind hole (28) is formed in which a third bearing bush (24) is arranged, the actuating shaft (14) being supported in said bush.

9. The flap device for an internal combustion engine of claim 8, **characterized in that** the axial end (29) of the third bearing bush (24) protrudes into the flow channel (12).

## Revendications

1. Dispositif à clapet pour moteur à combustion interne, comprenant
un boitier d'écoulement (10), dans lequel un canal d'écoulement (12) est formé,
un arbre de commande (14),
un corps de clapet (16) disposé sur l'arbre de commande (14) dans le canal d'écoulement (12),
un alésage (26) dans le boitier d'écoulement (10), à travers lequel l'arbre de commande (14) saille vers l'extérieur,
un premier coussinet (20) disposé dans l'alésage (26) et dans lequel l'arbre de commande (14) est logé, et
des moyens d'étanchéité radialement entourant l'arbre de commande (14) et comportant une membrane métallique (50) annulaire,
**caractérisé en ce**
**qu'**une section (44) radialement extérieure de la membrane métallique (50) est serrée axialement entre un manchon de fermeture (38) et un épaulement (68) à l'alésage (26) du boitier d'écoulement (10), ledit épaulement formant une surface d'appui (66), et une section (52) radialement intérieure s'appuie contre une partie (54) radialement intérieure d'une bague de glissement (56), dont la surface de contact (61) avec la membrane métallique (50) est disposée plus proche du canal d'écoulement (12) que la surface d'appui (66), les moyens d'étanchéité comprenant un manchon d'arbre (60) monté sur l'arbre de commande (14), contre laquelle la bague de glissement (56) reste par son côté axialement opposé à la membrane métallique (50).

2. Dispositif à clapet pour moteur à combustion interne selon la revendication 1, **caractérisé en ce que** la bague de glissement (56) est courbée sphériquement dans la partie (54) radialement intérieure.

3. Dispositif à clapet pour moteur à combustion interne selon l'une quelconque des revendications précédentes, **caractérisé en ce que** le manchon de fermeture (38) a une ouverture (42), à travers laquelle l'arbre de commande (14) s'étend et une extrémité (46) axiale des parois latérales (44) reste contre la membrane métallique (50).

4. Dispositif à clapet pour moteur à combustion interne selon la revendication 3, **caractérisé en ce que** la surface d'appui (66) est formée sphériquement dans une partie (70) formée radialement à l'intérieur des parois latérales (44) du manchon de fermeture (38).

5. Dispositif à clapet pour moteur à combustion interne selon l'une quelconque des revendications 3 ou 4, **caractérisé en ce qu'**un évidement (64) est formé dans les parois latérales (44) du manchon de fermeture (38), dans lequel une saillie (62) de la bague de glissement (56) saille, la saillie s'étendant radialement vers l'extérieur.

6. Dispositif à clapet pour moteur à combustion interne selon l'une quelconque des revendications précédentes, **caractérisé en ce qu'**un deuxième coussinet (22) est disposé dans l'alésage (26), l'extrémité (72) axiale du coussinet s'étendant dans le canal d'écoulement (12).

7. Dispositif à clapet pour moteur à combustion interne selon la revendication 6, **caractérisé en ce que** le corps de clapet (16) est sollicité par la force d'un ressort de compression (74) contre le deuxième coussinet (22) ou une rondelle de butée adjacente au deuxième coussinet (22).

8. Dispositif à clapet pour moteur à combustion interne selon l'une quelconque des revendications 6 ou 7, **caractérisé en ce qu'**un trou borgne (28) est formé dans le côté du boitier d'écoulement (10) opposé à l'alésage (26), dans lequel trou un troisième coussinet (24) est disposé dans lequel l'arbre de commande (14) est logé.

9. Dispositif à clapet pour moteur à combustion interne selon la revendication 8, **caractérisé en ce que** le troisième coussinet (24) saille dans le canal d'écoulement (12) par son extrémité axial (29).
